# EUROPEAN PATENT APPLICATION

(11) **EP 4 598 048 A1**
(43) Date of publication of application: **06.08.2025**
(21) Application number: 24155037.5
(22) Date of filing: 31.01.2024
(51) Int. Cl.: H04Q 11/00

(54) **FIBRE OPTIC TELECOMMUNICATIONS NETWORK AND A METHOD OF OPERATING THE SAME**

(71) Applicant: British Telecommunications public limited company, London E1 8EE (GB)
(72) Inventor: HORSLEY, Ian, London, E1 8EE (GB); PORTI RAFEL, Albert, London, E1 8EE (GB); REID, Andrew, London, E1 8EE (GB)
(74) Representative: British Telecommunications public limited company Intellectual Property Department

(57) **Abstract**

A method (400) of operating a fibre optic telecommunications network (100), said network comprising a/an: Optical Line Terminal (110), OLT, configured for Time-Division Multiplexing, TDM, communication; optical switch (120), connected to the OLT and arranged at a junction of a first branch (140-2-1) and a second branch (140-2-2), different to the first branch, of the fibre optic telecommunications network, and configured to switch between, at least, a: first state (260-1), in which the OLT is connected, via the optical switch, to the first branch instead of the second branch; and second state (260-2), in which the OLT is connected, via the optical switch, to the second branch instead of the first branch; first ONU set (130-1), comprising at least one ONU, connected to the optical switch via the first branch; second ONU set (130-2), comprising at least one ONU, connected to the optical switch via the second branch; scheduler (220) for scheduling switching of the optical switch between the first state and the second state according to a schedule, wherein said scheduler is coordinated with a TDM timetable for communication between the OLT and each of the first ONU set and the second ONU set using TDM; the method comprising the steps of: providing the optical switch in one of the first state and the second state, thereby facilitating communication between the OLT and the first ONU set or the second ONU set, respectively (410); subsequently determining, using the scheduler, an upcoming time to switch the optical switch from the state in which said switch is provided to the other one of the first state and second state, so as to cause routing between the OLT and the other of the first ONU set and the second ONU set in coordination with the TDM timetable (420); and instructing, at the determined upcoming time, and subsequently causing, the optical switch to switch to said other state (440).

## Description

### Field of Invention

The present invention relates to a fibre optic telecommunications network and to a method of operating said network.

### Background

Passive Optical Networks (PONs) use a splitter (*e*.*g*. wavelength or power) in the distribution network to allow multiple Optical Network Units (ONUs) to be served by a single spine fibre and Optical Line Termination (OLT) in the exchange. This reduces the headend cost and power consumption per-ONU compared to a corresponding Point-to-Point (PtP) network. However, splitters cause signal attenuation, and therefore require overall more powerful transmitters and/or more sensitive receivers (compared to a corresponding PtP network).

It is an aim of the present invention to at least alleviate some of the aforementioned problems.

### Statements of Invention

According to a first aspect of the present invention, there is provided: a method of operating a fibre optic telecommunications network, said network comprising a/an: Optical Line Terminal, OLT, configured for Time-Division Multiplexing, TDM, communication; optical switch, connected to the OLT and arranged at a junction of a first branch and a second branch, different to the first branch, of the fibre optic telecommunications network, and configured to switch between, at least, a: first state, in which the OLT is connected, via the optical switch, to the first branch instead of the second branch; and second state, in which the OLT is connected, via the optical switch, to the second branch instead of the first branch; first ONU set, comprising at least one ONU, connected to the optical switch via the first branch; second ONU set, comprising at least one ONU, connected to the optical switch via the second branch; scheduler for scheduling switching of the optical switch between the first state and the second state according to a schedule, wherein said scheduler is co-ordinated with a TDM timetable for communication between the OLT and each of the first ONU set and the second ONU set using TDM; the method comprising the steps of: providing the optical switch in one of the first state and the second state, thereby facilitating communication between the OLT and the first ONU set or the second ONU set, respectively; subsequently determining, using the scheduler, an upcoming time to switch the optical switch from the state in which said switch is provided to the other one of the first state and second state, so as to cause routing between the OLT and the other of the first ONU set and the second ONU set in coordination with the TDM timetable; and instructing, at the determined upcoming time, and subsequently causing, the optical switch to switch to said other state.

Preferably, the TDM timetable comprises an allocation of time slots for transmission from, and reception by, the (or any) OLT and the (or any) first ONU set and the second ONU set, and/or vice versa. Preferably, the time slot comprises a start time and end time. Optionally, consecutive time slots may be separated by a guard window, in which there is no transmission or reception. As used herein, the scheduler being co-ordinated with the TDM timetable preferably connotes the schedule comprising suitable timings that permit the optical switch to switch to the appropriate state (e.g. first or second), so as to connect the entities (e.g. OLT and first ONU set or second ONU set) allocated by the TDM timetable for transmission and reception, at least in time for commencement, or reception at the optical switch, of such transmissions for a corresponding time slot. Optionally the schedule is the same as the TDM timetable, or may be different, and may include the switching delay.

Preferably, the providing, determining, instructing and causing steps form a process, in which said process is re-iterated such that the state in which the optical switch is provided is the state to which said optical switch is instructed and caused to switch in an immediately preceding iteration of the process, thereby allowing serial switching of the optical switch, at least, between the first and second states.

Preferably, the scheduler is coordinated with the TDM such that a first downstream transmission (or, at least, a part thereof) for the first ONU set arrives at the optical switch whilst (optionally, only whilst) said optical switch is provided in the first state, and the optical switch may remain in the first state for the (optionally, the remaining and/or entire) duration of the first downstream transmission. Preferably, the scheduler is coordinated with the TDM such that a second downstream transmission (or, at least, a part thereof) for the second ONU set arrives at the optical switch whilst (optionally, only whilst) said optical switch is provided in the second state, and the optical switch may remain in the second state for the (optionally, the remaining and/or entire) duration of the second downstream transmission.

Preferably, the method further comprises a step of providing the schedule to the optical switch, and wherein the determining and instructing steps are performed by the optical switch; in this way, a timing of operation of the optical switch may be remotely controlled. Preferably, the schedule is communicated to the optical switch by, and from, the OLT, which may permit the OLT to orchestrate operation of the optical switch. Optionally, the schedule is communicated for each (and at least one or two) iteration/s of the process. Optionally, the schedule is communicated only once for a plurality of upcoming iterations. Preferably, the optical switch comprises a processor configured to control operation of the optical switch, and wherein the schedule is stored locally within said processor, and/or received by, the processor from a source remote to the optical switch. Preferably, the schedule is communicated before the determined time by, at least, a communication and/or processing delay. Preferably, said communication delay comprises a time to communicate the schedule to the optical switch (e.g. from the OLT). Preferably, said communication delay is measured, and may be measured using OTDR. Preferably, said processing delay is a time for the optical switch to process the schedule, after receipt by the optical switch (and, optionally, specifically by the processor), so as subsequently to be able to determine the upcoming time to switch, and to perform the instructing of the optical switch to switch. Optionally, the determining and instructing steps are only performed by the optical switch.

Preferably, the determining and instructing steps are performed by the OLT. Optionally, communicating the schedule and/or the instructing is performed over the fibre optic telecommunications network, and via a control channel that is separate (optionally, entirely) to a service channel for providing telecommunications services to users associated with the first and second ONU sets. Optionally, said determining and instructing steps are performed by the OLT for downstream communications from the OLT to any one of the ONUs.

Preferably, the determining and instructing steps are performed by the first and or second ONU sets. Optionally, at least one ONU in said sets performs said determining and instructing steps. Optionally, said determining and instructing steps are performed for upstream communications from any one of the ONUs to the OLT. Optionally, the optical switch comprises a photovoltaic element, wherein switching of the optical switch is powered by energy retrieved by the photovoltaic element. Optionally, instructing the optical switch comprises the OLT or an ONU transmitting an optical signal for energising the photovoltaic element so as to power switching of the optical switch.

Preferably, the determined time to switch includes a switching delay between instructing and completing switching of the optical switch. That is, the determined time for the optical switch to, at least, instruct and cause switching accounts for said switching delay. Preferably, said switching delay is non-zero. Preferably, said switching delay is added to a time slot (*e*.*g*. a start or end time) for transmissions according to the TDM configuration thereby to arrive at the determined time. Preferably, the determined time includes said switching delay in that said determined time is prior to completing the switching by, at least, said switching delay.

Preferably, the determined time to switch includes a transmission delay between transmission of an optical signal from the OLT or from one of the ONUs and receipt of said transmission at the optical switch. Preferably, the determined time includes said transmission delay in that said determined time is delayed by, at most, said transmission delay.

Preferably, the scheduler is further coordinated with the TDM timetable of the first and second ONU sets such that a first upstream transmission (or, at least, a part thereof) from the first ONU set to the OLT arrives at the optical switch whilst (optionally, only whilst) said optical switch is provided in the first state, and the optical switch may remain in the first state for the (optionally, the remaining and/or entire) duration of the first upstream transmission, and such that a second upstream transmission (or, at least, a part thereof) from the second ONU set to the OLT arrives at the optical switch whilst (optionally, only whilst) said optical switch is provided in the second state, and the optical switch may remain in the second state for the (optionally, the remaining and/or entire) duration of the second upstream transmission.

Preferably, the optical switch comprises a: first switching element configured to communicate only upstream communications, and to switch between the first and second states; and second switching element configured to communicate only downstream communications, and to switch between the first and second states; wherein, the method is performed in respect of each of the first and second switching elements so as to switch between the first and second states for upstream and downstream communication in coordination with the TDM timetable. Optionally, switching of the first and second switching elements is independently operable.

Preferably, the first and/or second branch/es comprise/s an optical splitter. Optionally, the optical splitter is a power and/or wavelength splitter.

Preferably, the first and/or second ONU set/s comprise/s a plurality of ONUs connected to the optical splitter/s. Preferably, the telecommunications network downstream of the optical splitter is in the form of a Passive Optical Network.

Preferably, the telecommunications network further comprises a: plurality of the optical switches; and spine power splitter, wherein each of the plurality of optical switches is connected to the OLT via the spine power splitter; and wherein the method is performed for each of the plurality of the optical switches. Preferably, the method is simultaneously performed (optionally, in parallel) for each of the plurality of the optical switches. Preferably, each of said plurality of the optical switches is connected to a respective first ONU set and second ONU set, thereby providing a plurality of each of said sets.

Preferably, the telecommunications network further comprises a: further optical switch, connected to the optical switch, via the second branch, and arranged at a junction of a third branch and a fourth branch, each different to the first branch and the second branch, of the fibre optic telecommunications network, and configured to switch between, at least, a: third state, in which the optical switch is connected, via the further optical switch, to the third branch instead of the fourth branch; and fourth state, in which the optical switch is connected, via the further optical switch, to the fourth branch instead of the third branch; third ONU set, comprising at least one ONU, connected to the further optical switch via the fourth branch; wherein: the second ONU set is connected to the further optical switch via the third branch; the scheduler is further configured to schedule switching of the further optical switch between the third state and the fourth state, wherein said scheduler is further coordinated with a TDM timetable for communication between the OLT and the third ONU set using TDM; and the method further comprises the steps of: providing the further optical switch in one of the third state and the fourth state, thereby facilitating communication between the optical switch and the second ONU set or the third ONU set, respectively; subsequently determining, using the scheduler, an additional upcoming time to switch the further optical switch from the state in which said switch is provided to the other one of the third state and fourth state, so as to cause routing between the OLT and the other of the second ONU set and the third ONU set in coordination with the further TDM timetable; and instructing, at the determined additional upcoming time, and subsequently causing, the further optical switch to switch to said other state. Optionally, the further optical switch is formed of the same constituent components as the optical switch.

Preferably, the telecommunications network further comprising a: further OLT, configured for TDM communication, and connected to the optical switch independently of the OLT, and wherein the optical switch is further configured to switch between a: primary state, in which the optical switch is connected to the OLT; secondary state, in which the optical switch is connected to the further OLT; wherein, the scheduler is further configured for scheduling switching of the optical switch between the primary state and the secondary state according to the schedule, wherein said scheduler is further co-ordinated with an additional TDM timetable for communication between the further OLT and each of the first ONU set and the second ONU set using TDM; and wherein the method further comprises the steps of: providing the optical switch in one of the primary or secondary states, thereby facilitating communication between the OLT or further OLT, respectively, and the first ONU set or second ONU set; subsequently determining, using the scheduler, a further upcoming time to switch the optical switch from the primary or secondary state in which said switch is provided to the other one of said states, so as to cause routing between the first ONU set or the second ONU and the other one of the OLT and further OLT in coordination with the TDM timetable and the additional TDM timetable; and instructing, at the further determined time, and subsequently causing, the optical switch to switch to said other one state. Preferably, the optical switch is not connected to the further OLT or OLT in the primary state or secondary state, respectively.

According to another aspect of the invention, there is provided a (optionally, non-transient) computer-readable carrier medium comprising a computer program, which, when the computer program is executed by a computer, causes the computer to carry out the steps of the method/s described above.

According to yet another aspect of the invention, there is provided a fibre optic telecommunications network comprising: Optical Line Terminal, OLT, configured for Time-Division Multiplexing, TDM, communication; optical switch, connected to the OLT and arranged at a junction of a first branch and a second branch, different to the first branch, of the fibre optic telecommunications network, and configured to switch between, at least, a: first state, in which the OLT is connected, via the optical switch, to the first branch instead of the second branch; and second state, in which the OLT is connected, via the optical switch, to the second branch instead of the first branch, wherein the optical switch is provided in one of the first state and the second state; first ONU set, comprising at least one ONU, connected to the optical switch via the first branch; second ONU set, comprising at least one ONU, connected to the optical switch via the second branch; scheduler for scheduling switching of the optical switch between the first state and the second state according to a schedule, wherein said scheduler is co-ordinated with a TDM timetable for communication between the OLT and each of the first ONU set and the second ONU set using TDM; and a processor configured to: determine, using the scheduler, an upcoming time to switch the optical switch from the state in which said switch is provided to the other one of the first state and second state, so as to cause routing between the OLT and the other of the first ONU set and the second ONU set in coordination with the TDM timetable; and instruct, at the determined upcoming time, and subsequently cause, the optical switch to switch to said other state. Preferably, the processor forms a part of the OLT and/or the optical switch.

Preferably, the optical switch provides an interconnection for the first branch, second branch and the OLT. As used herein, downstream preferably connotes a direction of communication within the telecommunications network commencing, and directed away from, the, or any, OLT. As used herein, upstream preferably connotes a direction of communication within the telecommunications network commencing, and directed away, from any one of the ONUs. Preferably, the further optical switch provides an interconnection for the second branch, third branch and fourth branch.

Preferably, the TDM configuration is configured such that an upstream and downstream communication is received at the OS (and/or further OS) at the same time. Preferably, the ONUs are configured to communicate upstream communications to the OLT using TDM, and said TDM timetable comprises time slots allocated for said upstream communications, the scheduler may therefore further be co-ordinated with said upstream communications. Preferably, the ONUs are configured to communicate upstream communications to the OLT using TDMA. Optionally, the OLT is configured to operate in a Continuous Mode and/or a Burst Mode. Optionally, the OLT comprises a burst-mode transmitter. Optionally, each ONU (e.g. of the first ONU set and/or the second ONU set) comprises a burst-mode receiver and transmitter. Optionally, the schedule is a constituent of at least one memory component.

The above summary is not intended to describe each illustrated embodiment or every implementation of the subject matter hereof. The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

It should be understood that the individual operations used in the methods of the present teachings may be performed in any order and/or simultaneously, as long as the teaching remains operable.

Furthermore, it should be understood that the apparatus and methods of the present teachings can include any number, or all, of the described embodiments, as long as the teaching remains operable.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently. As used throughout, the word 'or' can be interpreted in the exclusive and/or inclusive sense, unless otherwise specified.

The invention extends to a fibre optic telecommunications network, and to a method of operating said network, as described herein and/or substantially as illustrated with reference to the accompanying drawings. The present invention is now described, purely by way of example, with reference to the accompanying diagrammatic drawings, in which:
Figure 1 shows an exemplary fibre optic telecommunications network comprising an optical switch;
Figure 2 shows a first exemplary optical switch;
Figure 3 shows a detailed view of the fibre optic telecommunications network;
Figure 4 shows a process of operating the optical switch;
Figure 5 shows a further exemplary fibre optic telecommunications network comprising the optical switch;
Figure 6 shows yet a further exemplary fibre optic telecommunications network comprising a second exemplary optical switch; and
Figure 7 shows yet another exemplary fibre optic telecommunications network comprising a third exemplary optical switch.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by, at least, the claims.

### Specific Description

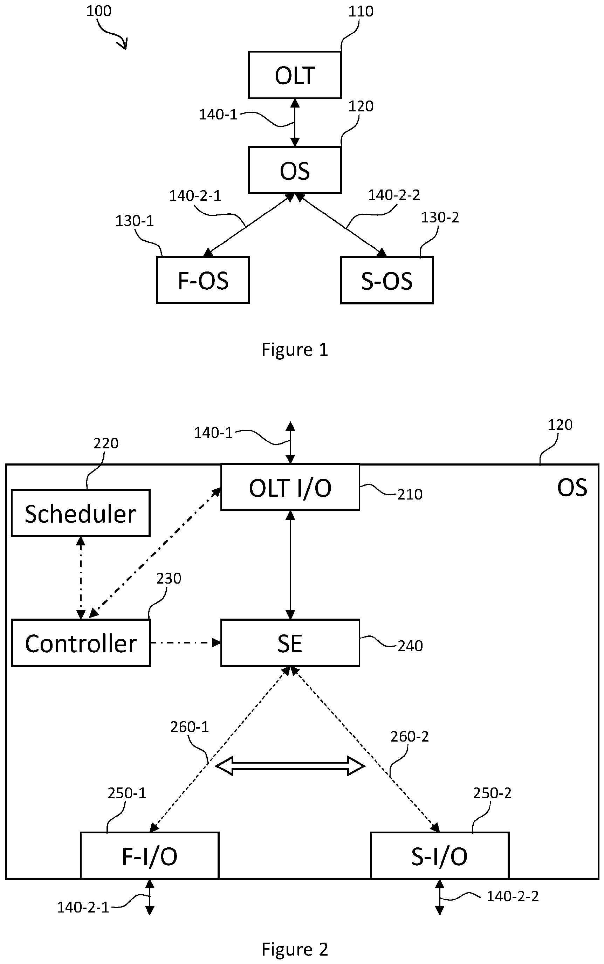

Figure 1 is a schematic diagram of an exemplary fibre optic telecommunications network 100, such as for providing wide-area fixed-access broadband network services. In particular, the network 100 is in the form of a Time-Division Multiplexed (TDM) network that hybridises a switched Point-to-Point (PtP) network and a Passive Optical Network (PON).

The network 100 comprises a/an: Optical Line Terminal (OLT) 110; Optical Switch (OS) 120; and a First ONU Set (F-OS) 130-1, and a Second ONU Set (S-OS) 130-2.

The aforementioned components are interconnected using optical links provided by optical fibres 140 so as to provide telecommunications services between, at least, the OLT 110 and the F-OS 130-1, and between the OLT and the S-OS 130-2, all via the OS 120.

In particular, the optical fibres 140 comprise a: spine fibre 140-1, connecting the OLT 110 and the OS 120; and a plurality of branch fibres 140-2, in which a first branch 140-2-1 connects the OS with the F-OS 130-1, and a different, and independent, second branch 140-2-2 connects the OS with the S-OS 130-2.

The OLT 110 is located, for example, at a local exchange. The OLT is operatively connected to a higher-layer network management software application (not shown) comprising an Element Management System (not shown) and/or a Network Management System (not shown).

The OLT 110 is configured to communicate with the F-OS 130-1 and S-OS 130-2 using Time-Division Multiplexing (TDM) and Burst Mode (BM) downstream transmission, such that separate time slots are provided for communications between the OLT and each of the F-OS and S-OS. Accordingly, the OLT comprises a TDM configuration for scheduling (i.e. when, how long, and a direction of) communication with each of the F-OS and S-OS. As described in more detail below, the OS 120 is configured to form appropriate connections in accordance with the TDM configuration.

Figure 2 is a detailed schematic diagram of the OS 120. The OS 120 comprises a/an: OLT Input and Output 210 (OLT I/O); scheduler 220; controller 230; Switching Element 240 (SE); First Input and Output 250-1 (F-I/O); and Second Input and Output (S-I/O) 250-2.

The OLT I/O 210 is configured to receive the spine fibre 140-1 so as to connect the OS 120 with the OLT. In turn, the OLT I/O is connected to the SE 240. Correspondingly, the F-I/O 250-1 is configured to receive the first branch 140-2-1 so as to connect the OS with the F-OS 130-1, and the S-I/O 250-2 is configured to receive the second branch 140-2-2 so as to connect the OS with the S-OS 130-2.

The SE 240 is a 1x2 optical switching element configured selectively to be switched between a first state 260-1 and a second state 260-2. In the first state, the SE is connected to the F-I/O 250-1 , instead of the S-I/O, thereby effectively to connect the OLT with the F-OS for optical communication therebetween. In the second state, the SE is connected to the S-I/O 250-2, instead of the F-I/O, thereby effectively to connect the OLT with the S-OS for optical communication therebetween. The SE is for example in the form of a/an mechanical, Microelectromechanical System (MEMs), all-optical, and/or electro-optical switching element.

The controller 230 is connected to the SE 240 so as to instruct, by a switching instruction, switching of the SE between the first 260-1 and second 260-2 states. The controller is in communication with the scheduler 220, which comprises memory for storing thereon a schedule of timetable data defining time slots for the TDM configuration of the OLT 110. The controller is configured to store, retrieve, process and transmit data. In particular, the controller is configured to retrieve, from the scheduler, the timetable data so as duly to instruct appropriate switching of the SE using the timetable data.

The controller 230 is also connected with the OLT I/O 210. In this way, the controller is available to receive, from the OLT 110, instructions and data, including the timetable data. Timetable data received at the controller is then communicated to the scheduler 220 for storage. Communication between the controller and OLT is performed over the spine fibre 140-1 and over a control channel that is separate (e.g. using a different wavelength) to a service channel for providing telecommunications services to the F-OS 130-1 and S-OS 130-2.

Timetable data communicated from the OLT 110 comprises at least one upcoming time slot of the TDM configuration, and is communicated by the OLT before, by at least a latency period, a constituent upcoming time slot. The latency period comprises, at least, a:
1. communication delay, in which fully to communicate the timetable data from the OLT 110 to the OS 120;
2. processing delay, in which to retrieve and process the timetable data by the controller 230, and subsequently to generate a switching instruction for the SE 240;
3. switching delay, in which the SE 240 completes switching between states 260, having received the switching instruction; and
4. transmission delay, which is a time elapsed to communicate an optical signal through the network 100 between the OLT 110 and the OS 120, or between the F-OS 130-1 or S-OS 130-2 and the OS 120.

The transmission delay acts against the communication, processing and switching delays, and affords the OS 120 additional time to switch in co-ordination with the TDM configuration (given the time for a transmission to arrive at the OS).

The transmission and communication delays are primarily governed by distances within the network 100, and are therefore determined using optical ranging along the appropriate optical link (*e*.*g*. using Optical Time-Domain Reflectometry), and may vary for each ONU set 130 (and even each ONU within a given set).

By accounting for the latency period, the OLT 110 is configured to communicate the timetable data to the OS 120 so that the OS is operable to be provided in the appropriate state 260 in harmony with the TDM configuration, and thereby help ensure correct routing of transmissions.

Where the timetable data comprises only one upcoming time slot, the timetable data is serially communicated for each time slot before the next upcoming time slot by, at least, the latency period. Where the timetable data is communicated before the next upcoming time slot, less exactly the latency period, then this permits just-in-time switching.

Where the timetable data comprises more than just the next upcoming time slot (*i*.*e*. several timeslots hence), then the latency period for all time slots that are subsequent to the most imminent need not account for the communication delay.

Regardless of the manner in which the timetable data is provided (*e*.*g*. for one or batches of upcoming time slots, and/or just-in-time or with greater notice, *etc.*), the OS 120 is configured to determine, with sufficient advanced knowledge (given the latency period), the state 260 the SE is to occupy, and when, so as to be coordinated with the TDM configuration of the OLT 110.

Simplified schematic timetable data is provided in Table 1 below, as follows:

**Table 1**

| *Slot Time, t (ms)* | *Slot Assignee* |
|---|---|
| 0.00 | OLT to F-OS |
| 2.00 | F-OS to OLT |
| 4.00 | OLT to S-OS |
| 6.00 | S-OS to OLT |

In Table 1, the "*Slot Time*" field denotes a time, *t,* that a given time slot commences (and the earliest point at which transmission may begin) for the communication path denoted in the corresponding "*Slot Assignee*" field. For example, at *t*=0, the OLT 100 is permitted to transmit to the F-OS 130-1, and is scheduled to cease such transmissions before the subsequent time slot at *t*=2.

As an example, the processing delay and the switching delay of the OS 120 are each 0.01ms, and the transmission delay from the OLT 110 to the OS 120 is 0.03ms. For time slot commencing at *t*=4.00ms, the OS 110 is to be provided in the second state 260-2 so as to connect the OLT 110 with the S-OS 130-2. Transmissions (for the S-OS) from the OLT 110 commencing at *t*=4.00ms are only received at the OS at *t*=4.03ms, due to the transmission delay. Given the processing and switching delays, the OS 110 therefore commences switching to the second state 260-2 (from the first state 260-1 for the time slot commencing at *t*=2.00ms) at *t*=4.01ms; this is the switching time of the OS for the time slot commencing at *t*=4.00ms.

Furthermore, exemplarily taking the communication delay to be 0.03ms, then the latest that the OLT is configured to transmit the timetable data informing the OS of the time slot commencing at *t*=4.00ms is *t*=3.98ms.

It will be appreciated that, in practice, timetable data and delays may vary due, at least, to the architecture and constituent components of the fibre optic network 100, environmental conditions, and specifics of the TDM configuration (*e*.*g*. guard slots, congestion and activity, dynamic time slot allocation algorithms, *etc.*)*.*

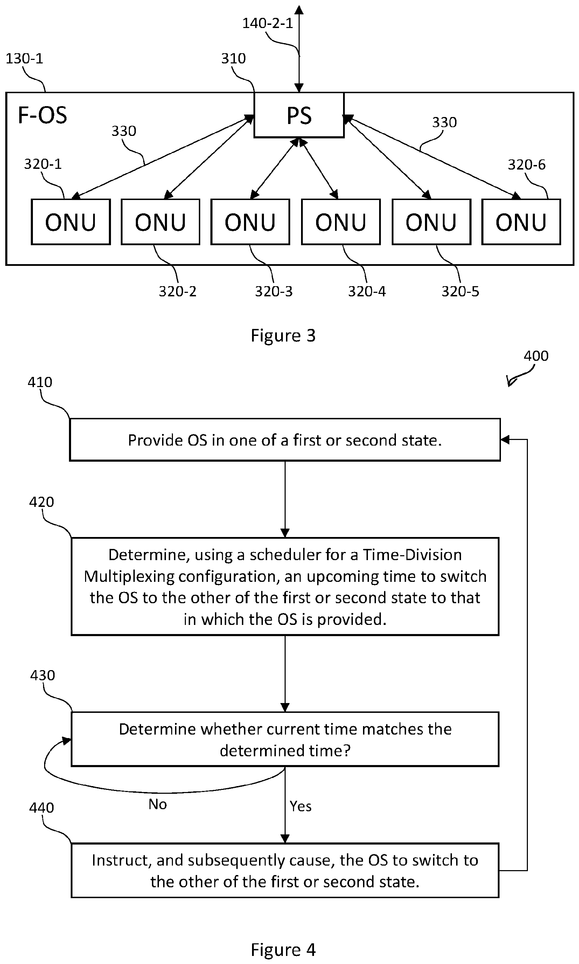

Figure 3 is a schematic detailed view of the F-OS 130-1, which comprises a: Power Splitter (PS) 310; a plurality of (six) ONUs 320 (suffixed -1 to -6); and respective feeder fibres 330. The PS is exemplarily in the form of a 1x6 splitter. In this way, the F-OS effectively forms a part of a local multipoint Passive Optical Network (PON), such that the plurality of ONUs 320 are connected, each via a dedicated feeder fibre 330, up to the OS 120 without active switching, and instead by the PS. Each of the ONUs 320 are configured to communicate with the OLT in compliance with the TDM configuration using Time-Division Multiple-Access (TDMA) and Burst Mode (BM) upstream transmission. Slot times are allocated to individual ONUs 320 using, for example, a Dynamic Bandwidth Algorithm (DBA). To help mitigate de-synchronisation between the ONUs, the network 100 is configured to perform Burst Mode Clock and Data Recovery (BM-CDR).

The S-OS 130-2 provides the network 100 with at least one further ONU, and does so in substantially a corresponding manner to the F-OS 130-1, with more or fewer ONUs, or without the PS 310 (*e*.*g*. as a single ONU connected to the OS 120).

In any event, the combination of the local PON provided by the F-OS 130-1, the additional ONU/s provided by the S-OS (as another local PON, or otherwise) and the active switching provided by the OS 120 may assist the network 100 to - for a given limited power output from the OLT 110 -serve a greater number of ONUs than would otherwise be possible were the same total number of ONUs (across the F-OS and S-OS) connected to only a PON architecture without the OS.

Figure 4 is a flow diagram of a process 400 of operating the OS 120 in coordination with the TDM configuration.

In a first step 410, the OS 120 is provided in one of the first 260-1 or second 260-2 states so as to facilitate communication between the OLT 110 and the corresponding one of the F-OS 130-1 and S-OS 130-2, respectively. For example, with reference to Table 1, at *t*=3.5ms the OS 120 is provided in the first state 260-1 (thereby to serve only the F-OS 130-1).

At a next step 420, while the OS 120 remains in the state provided at immediately preceding step 410, the controller 230, calling upon the timetable data within the scheduler 220, determines the next upcoming slot time for which the OS is to change state and identifies said state (*e*.*g*. a change to the second state 260-2 in time for the *t*=4.00ms slot time).

The controller 230 having (pre-defined) knowledge of the processing, switching and transmission delays, determines the switching time of the SE 240 before the next upcoming slot time. Persisting with the numerical example described above, for the *t*=4.00ms slot time, the switching time is *t*=4.01ms.

At a next step 430, the controller 230, using a clock (not shown), monitors the current time and compares the current time with the determined switching time. Process 400 remains at step 430 until the determined switching time, at which point the process proceeds to subsequent step 440.

At step 440, and at the switching time, the controller 230 generates and communicates a switching instruction to the SE 240 (during which the processing delay elapses), and, upon receipt of said instruction, the SE performs switching to the identified state, and completes the switching (after the switching delay). Thus, the OLT is configured to serve another one of the set of ONUs 130 in accordance with the TDM configuration. For example, the SE 240 is in the second state 260-2 at *t*=4.03ms, at which point transmissions from the OLT for the S-OS are received at the OS, and are therefore subsequently routed through the S-I/O 250-2.

After completion of step 440, process 400 returns to step 410 so as to re-iterate said process. In this way, the OS 120 is serially switched between connecting the OLT with the F-OS and S-OS.

### Alternatives and Modifications

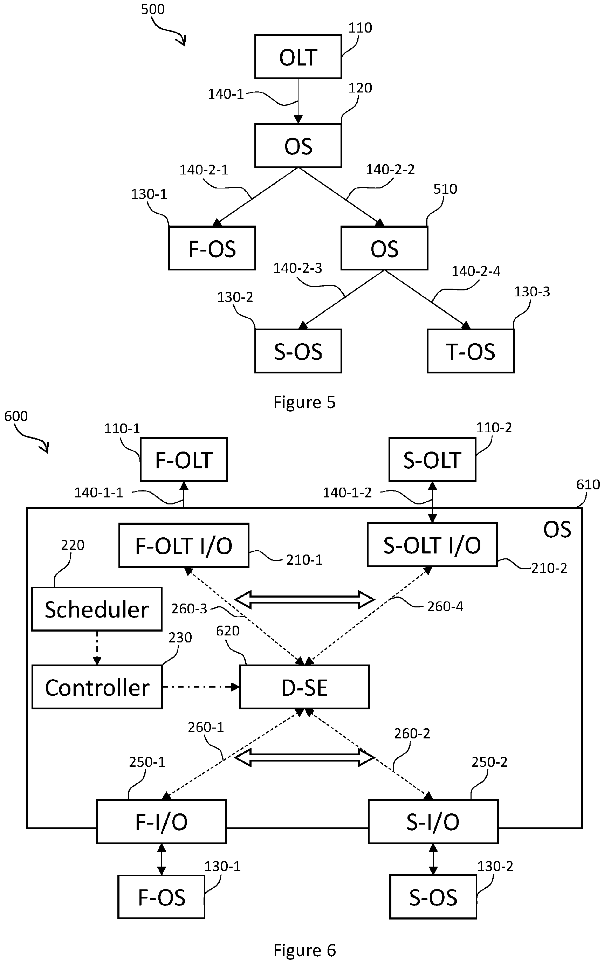

Figure 5 is a schematic diagram of an alternative exemplary fibre optic telecommunications network 500 to that of Figure 1, comprising a plurality of the OS 120. Specifically, there is additionally provided a: further OS 510; third branch 140-2-3; fourth branch 140-2-4; and Third ONU set 130-3 (T-OS).

The further OS 510 is connected to the OS 120 (and specifically to the S-I/O 250-2) via the second branch 140-2-2 (thereby replacing the S-OS 130-2 in network 100). The further OS 510 comprises substantially the same components as the OS 120 as described with reference to Figure 2, and the T-OS 130-3 is substantially equivalent to the F-OS 130-1 and/or S-OS 130-2 as described with reference to Figure 3.

In turn, the further OS 510 is connected to the S-OS 130-2 via the third branch 140-2-3 and to the T-OS 130-3 via the fourth branch 140-2-4, via a corresponding F-I/O and a S-I/O (not shown in Figure 5) of the further OS 510, respectively.

The further OS 510 is operated in a manner corresponding to the OS 120 (such that outputs from the S-I/O 250-2 of the OS 120 are effectively the OLT 110 input for the further OS 510), and coordinated to facilitate TDM communication between the OLT and the S-OS 130-2 and T-OS 130-3 via both the OS (when in the second state 260-2) and the further OS 510. In this way, the network 500 provides switching between each of the three sets of ONUs 130.

It will be appreciated that the principles established by the example of Figure 5, such that multiple OSs form a co-ordinated chain, are extendable to three or more chained OSs (and therefore to at least four sets of ONUs 130).

Figure 6 is a schematic diagram of an alternative fibre optic telecommunications network 600 comprising an alternative OS 610 and multiple OLTs 110.

Specifically, the network 600 comprises two separate OLTs - a First OLT 110-1 (F-OLT) and a Second OLT 110-2 (S-OLT), from which a first spine fibre 140-1-1 and a second spine fibre 140-1-2, respectively, emanate.

The OS 610 (in comparison to OS 120) comprises a First OLT Input/Output 210-1 (F-OLT I/O) and a Second OLT Input/Output 210-2 (S-OLT I/O) instead of the single OLT I/O of OS 120. The F-OLT I/O is configured to receive the first spine fibre 140-1-1, and is therefore connected to the F-OLT 110-1, whereas the S-OLT I/O is configured to receive the second spine fibre 140-1-2, and is therefore connected to the S-OLT 110-2. The F-OLT I/O and the S-OLT I/O effectively correspond with the OLT I/O 210 of OS 120, such that OS 610 comprises two separate I/O ports for two separate OLTs. Components corresponding with those of network 100 are reproduced in Figure 6 using like reference numerals.

The OS 610 further comprises a Dual Switching Element 620 (D-SE) instead of the SE of OS 120. The D-SE is configured to connect the F-OLT I/O 210-1 or S-OLT I/O 210-2 with the F-I/O or S-I/O, and is in the form of a 2x2 optical switch.

On an ONU-side of the network 600, the D-SE 620 is configured to switch between the first state 260-1 and the second state 260-2 (as per the SE), so as to switch between the F-I/O 250-1 and S-I/O 250-2.

Whereas, on an OLT-side, the D-SE is configured to switch between a third state 260-3 and a fourth state 260-4. In the third state, the D-SE is connected to the F-OLT I/O 210-1, instead of to the S-OLT I/O 210-2, thereby to connect the F-OLT 110-1 with the F-OS 130-1 or S-OS 130-2. In the fourth state, the D-SE is connected to the S-OLT I/O, instead of to the F-OLT I/O, thereby effectively to connect the S-OLT 110-2 with the F-OS or S-OS. The D-SE is configured such that pairings of OLT-side and ONU-side states is fully independent (*i*.*e*. either of the OLT I/Os are connectable to either of the F-I/O and S-I/O), or form fixed pairs (*e*.*g*. the S-OLT I/O is connectable only to the S-I/O).

The OS 610 is operated in a corresponding manner to that described with reference to process 400, such that the D-SE 620 is placed in the appropriate pair of ONU-side and OLT-side states (*i*.*e*. first 260-1 and third 260-3, first 260-1 and fourth 260-4, second 260-2 and third 260-3, or second 260-2 and fourth 260-4 states), as governed by the timetable data that is in turn co-ordinated with the TDM configurations for both OLTs 110.

In this way, multiple OLTs are available serially to serve multiple ONU sets 130, thereby providing, at least, greater redundancy and improved network resilience.

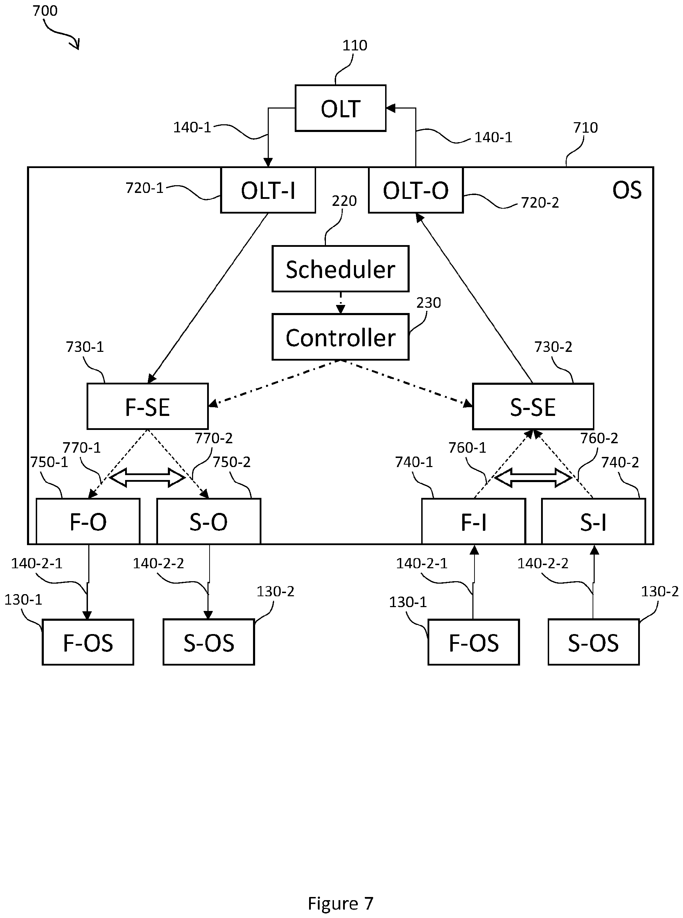

Figure 7 is a schematic diagram of a further alternative telecommunications network 700 that comprises yet another alternative OS 710.

The telecommunications network 700 is substantially akin to telecommunications network 100, with the replacement of the OS 120 by OS 710. Components corresponding with those of network 100 are reproduced in Figure 6 using like reference numerals.

Compared to OS 120, OS 710 comprises a/an: OLT Input 720-1 (OLT-I) channel; OLT-Output 720-2 (OLT-O) channel; First Switching Element 730-1 (F-SE); Second Switching Element 730-2 (S-SE); F-OS Input 740-1 (F-I) channel; F-OS Output 750-1 (F-O) channel; S-OS Input 740-2 (S-I) channel; and S-OS Output 750-2 (S-O) channel. The F-OS 130-1 and S-OS 130-2 are each shown twice in Figure 7 merely to aid clarity. In practice, the F-OS and S-OS need not be duplicated in this way in network 700.

OLT-I 720-1 and OLT-O 720-2 are each configured to receive the first spine fibre 140-1, and are thereby connected to the OLT 110. However, the OLT-I is configured to carry only downstream communications (*i*.*e*. from the OLT 110 to the F-OS 130-1 or S-OS 130-2), whereas the OLT-O is configured to carry only upstream communications (*i*.*e*. from the F-OS or S-OS to the OLT); this is achieved using, for example, a directional (de-)coupler (not shown).

In turn, the OLT-I 720-1 is connected to the F-SE 730-1, thereby to communicate downstream communications to the F-SE, whereas the OLT-O 720-2 is connected to the S-SE 730-2, thereby to receive upstream communications from the S-SE.

The F-I 740-1 and F-O 750-1 are configured to receive the first branch 140-2-1, and are therefore connected to the F-OS 130-1, whereas the S-I 740-2 and S-O 750-2 are configured to receive the second branch 140-2-2, and are therefore connected to the S-OS 130-2. In turn, the F-O and S-O are connected to the F-SE, whereas the F-I and S-I are connected to the S-SE.

The F-I 740-1 and S-I 740-2 are configured to carry only upstream communications from the F-OS 130-1 and S-OS 130-2, respectively, whereas the F-O 750-1 and S-O 750-2 are configured to carry only downstream communications to the F-OS and S-OS, respectively. Again, such directional separation is facilitated by, for example, further directional (de-)couplers.

Both the F-SE 730-1 and the S-SE 730-2 are 1x2 optical switching elements, that are each connected and controlled by the controller 230, and are, respectively, independently switched between a: first input state 760-1 and second input state 760-2; and first output state 770-1 and second output state 770-2.

In the first output state 770-1, the F-SE 730-1 is connected to the F-O 750-1, thereby connecting the OLT 110 with the F-OS 130-1 for downstream communication. In the second output state 770-2, the F-SE is connected to the S-O 750-2, thereby connecting the OLT with the S-OS 130-2 for downstream communication.

In the first input state 760-1, the S-SE 730-2 is connected to the F-I 740-1, thereby connecting the OLT 110 with the F-OS 130-1 for upstream communication. In the second input state 760-2, the S-SE is connected to the S-I 740-2, thereby connecting the OLT with the S-OS 130-2 for upstream communication.

The OS 710 is operated in a corresponding manner to that described with reference to process 400, such that the F-SE 730-1 and S-SE 730-2 effectively perform independent parallel instances of process 400 so as each to be provided in the appropriate states 760, 770 (*i*.*e*. first output state 770-1 or second output state 770-2, and first input state 760-1 or second input state 760-2, respectively), as governed by timetable data for each (upstream and downstream) direction of communication for each of the sets of ONUs 130.

In this way, with dedicated upstream and downstream switching elements 730, the rate of switching for any one of the switching elements 730 can be reduced (compared to OS 120) when serial time slots vary as to communication direction and entities (*e*.*g*. OLT to F-OS; S-OS to OLT; OLT to S-OS; and F-OS to OLT).

In yet another alternative to network 100, a 1xn (where n>1) power splitter is connected to the OLT 110 via the spine fibre 140-1 , and pluralities of the OS 120 (and therefore sets of ONUs 130) are each connected to said power splitter; this again provides a hybrid form of PON and actively-switched network.

In an alternative, the timetable data is provided to the OS, additionally or alternatively, by at least one of the ONUs.

In another alternative, the OS 120, 510, 610, 710 comprises a photovoltaic element configured to power switching of the respective switching element/s using an incident optical signal, such as transmitted by the, or an, OLT 110. In this case, the switching instruction is in the form of an optical signal, from an OLT 110, for energising the photovoltaic element so as to power switching.

It will be appreciated that each of the network 100, 500, 600, 700 and/or OS 120, 510, 610, 710, and further alternatives described herein, are available to be combined in any technically feasible and appropriate manner. For example, the chained OSs of network 500, are available to be combined with the dual OLTs 110 and dual-switching OS 610 of Figure 6 (*e*.*g*. such that OS 120 is replaced with OS 610), and with the direction-independent OS 710 of network 700 (*e*.*g*. such that further OS 510 is replaced with OS 710).

In one embodiment, the networks and/or its components or subsystems can include computing devices, microprocessors, modules and other computer or computing devices, which can be any programmable device that accepts digital data as input, is configured to process the input according to instructions or algorithms, and provides results as outputs. In one embodiment, computing and other such devices discussed herein can be, comprise, contain or be coupled to a Central Processing Unit (CPU) configured to carry out the instructions of a computer program. Computing and other such devices discussed herein are therefore configured to perform basic arithmetical, logical, and input/output operations.

Computing and other devices discussed herein can include memory. Memory can comprise volatile or non-volatile memory as required by the coupled computing device or processor to not only provide space to execute the instructions or algorithms, but to provide the space to store the instructions themselves. In one embodiment, volatile memory can include random access memory (RAM), dynamic random access memory (DRAM), or static random access memory (SRAM), for example. In one embodiment, non-volatile memory can include read-only memory, flash memory, ferroelectric RAM, hard disk, floppy disk, magnetic tape, or optical disc storage, for example. The foregoing lists in no way limit the type of memory that can be used, as these embodiments are given only by way of example and are not intended to limit the scope of the disclosure.

In one embodiment, the system or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a fibre optic telecommunications network, said network comprising a/an:
Optical Line Terminal, OLT, configured for Time-Division Multiplexing, TDM, communication;
optical switch, connected to the OLT and arranged at a junction of a first branch and a second branch, different to the first branch, of the fibre optic telecommunications network, and
configured to switch between, at least, a:
first state, in which the OLT is connected, via the optical switch, to the first branch instead of the second branch; and
second state, in which the OLT is connected, via the optical switch, to the second branch instead of the first branch;
first ONU set, comprising at least one ONU, connected to the optical switch via the first branch;
second ONU set, comprising at least one ONU, connected to the optical switch via the second branch;
scheduler for scheduling switching of the optical switch between the first state and the second state according to a schedule, wherein said scheduler is co-ordinated with a TDM timetable for communication between the OLT and each of the first ONU set and the second ONU set using TDM;
the method comprising the steps of:
providing the optical switch in one of the first state and the second state, thereby facilitating communication between the OLT and the first ONU set or the second ONU set, respectively; subsequently determining, using the scheduler, an upcoming time to switch the optical switch from the state in which said switch is provided to the other one of the first state and second state, so as to cause routing between the OLT and the other of the first ONU set and the second ONU set in coordination with the TDM timetable; and
instructing, at the determined upcoming time, and subsequently causing, the optical switch to switch to said other state.

2. A method according to Claim 1, further comprising a step of providing the schedule to the optical switch, and wherein the determining and instructing steps are performed by the optical switch.

3. A method according to any preceding claim, wherein the determining and instructing steps are performed by the OLT.

4. A method according to any preceding claim, wherein the determining and instructing steps are performed by the first and or second ONU sets.

5. A method according to any preceding claim, wherein the determined time to switch includes a switching delay between instructing and completing switching of the optical switch.

6. A method according to any preceding claim, wherein the determined time to switch includes a transmission delay between transmission of an optical signal from the OLT or from one of the ONUs and receipt of said transmission at the optical switch.

7. A method according to any preceding claim, wherein the optical switch comprises a:
first switching element configured to communicate only upstream communications, and to switch between the first and second states; and
second switching element configured to communicate only downstream communications, and to switch between the first and second states;
wherein, the method is performed in respect of each of the first and second switching elements so as to switch between the first and second states for upstream and downstream communication in coordination with the TDM timetable.

8. A method according to any preceding claim, wherein the first and/or second branch/es comprise/s an optical splitter.

9. A method according to Claim 8, wherein the first and/or second ONU set/s comprise/s a plurality of ONUs connected to the optical splitter/s.

10. A method according to any preceding claim, wherein the telecommunications network further comprises a:
plurality of the optical switches; and
spine power splitter, wherein each of the plurality of optical switches is connected to the OLT via the spine power splitter; and
wherein the method is performed for each of the plurality of the optical switches.

11. A method according to any preceding claim, wherein the telecommunications network further comprises a:
further optical switch, connected to the optical switch, via the second branch, and arranged at a junction of a third branch and a fourth branch, each different to the first branch and the second branch, of the fibre optic telecommunications network, and configured to switch between, at least, a:
third state, in which the optical switch is connected, via the further optical switch, to the third branch instead of the fourth branch; and
fourth state, in which the optical switch is connected, via the further optical switch, to the fourth branch instead of the third branch;
third ONU set, comprising at least one ONU, connected to the further optical switch via the fourth branch;
wherein:
the second ONU set is connected to the further optical switch via the third branch;
the scheduler is further configured to schedule switching of the further optical switch between the third state and the fourth state, wherein said scheduler is further co-ordinated with a TDM timetable for communication between the OLT and the third ONU set using TDM; and
the method further comprises the steps of:
providing the further optical switch in one of the third state and the fourth state, thereby facilitating communication between the optical switch and the second ONU set or the third ONU set, respectively;
subsequently determining, using the scheduler, an additional upcoming time to switch the further optical switch from the state in which said switch is provided to the other one of the third state and fourth state, so as to cause routing between the OLT and the other of the second ONU set and the third ONU set in coordination with the further TDM timetable; and
instructing, at the determined additional upcoming time, and subsequently causing, the further optical switch to switch to said other state.

12. A method according to any preceding claim, the telecommunications network further comprising a:
further OLT, configured for TDM communication, and connected to the optical switch independently of the OLT, and wherein the optical switch is further configured to switch between a:
primary state, in which the optical switch is connected to the OLT;
secondary state, in which the optical switch is connected to the further OLT;
wherein, the scheduler is further configured for scheduling switching of the optical switch between the primary state and the secondary state according to the schedule, wherein said scheduler is further co-ordinated with an additional TDM timetable for communication between the further OLT and each of the first ONU set and the second ONU set using TDM; and
wherein the method further comprises the steps of:
providing the optical switch in one of the primary or secondary states, thereby facilitating communication between the OLT or further OLT, respectively, and the first ONU set or second ONU set;
subsequently determining, using the scheduler, a further upcoming time to switch the optical switch from the primary or secondary state in which said switch is provided to the other one of said states, so as to cause routing between the first ONU set or the second ONU and the other one of the OLT and further OLT in coordination with the TDM timetable and the additional TDM timetable; and
instructing, at the further determined time, and subsequently causing, the optical switch to switch to said other one state.

13. A computer-readable carrier medium comprising a computer program, which, when the computer program is executed by a computer, causes the computer to carry out the steps of any one of the preceding claims.

14. A fibre optic telecommunications network comprising:
Optical Line Terminal, OLT, configured for Time-Division Multiplexing, TDM, communication;
optical switch, connected to the OLT and arranged at a junction of a first branch and a second branch, different to the first branch, of the fibre optic telecommunications network, and
configured to switch between, at least, a:
first state, in which the OLT is connected, via the optical switch, to the first branch instead of the second branch; and
second state, in which the OLT is connected, via the optical switch, to the second branch instead of the first branch, wherein the optical switch is provided in one of the first state and the second state;
first ONU set, comprising at least one ONU, connected to the optical switch via the first branch;
second ONU set, comprising at least one ONU, connected to the optical switch via the second branch;
scheduler for scheduling switching of the optical switch between the first state and the second state according to a schedule, wherein said scheduler is co-ordinated with a TDM timetable for communication between the OLT and each of the first ONU set and the second ONU set using TDM; and
a processor configured to:
determine, using the scheduler, an upcoming time to switch the optical switch from the state in which said switch is provided to the other one of the first state and second state, so as to cause routing between the OLT and the other of the first ONU set and the second ONU set in coordination with the TDM timetable; and
instruct, at the determined upcoming time, and subsequently cause, the optical switch to switch to said other state.

15. A fibre optic telecommunications network according to Claim 14, wherein the processor forms a part of the OLT and/or the optical switch.

## Amended claims

### Amended claims in accordance with Rule 137(2) EPC.

1. A method (400) of operating a fibre optic telecommunications network (100), said network comprising a/an:
Optical Line Terminal (110), OLT, configured for Time-Division Multiplexing, TDM, communication;
optical switch (120), connected to the OLT and arranged at a junction of a first branch (140-2-1) and a second branch (140-2-2), different to the first branch, of the fibre optic telecommunications network, and configured to switch between, at least, a:
first state (260-1), in which the OLT is connected, via the optical switch, to the first branch instead of the second branch; and
second state (260-2), in which the OLT is connected, via the optical switch, to the second branch instead of the first branch;
further OLT, configured for TDM communication, and connected to the optical switch independently of the OLT, and wherein the optical switch is further configured to switch between a:
primary state, in which the optical switch is connected to the OLT; and
secondary state, in which the optical switch is connected to the further OLT;
first ONU set (130-1), comprising at least one ONU, connected to the optical switch via the first branch;
second ONU set (130-2), comprising at least one ONU, connected to the optical switch via the second branch;
scheduler (220) for scheduling switching of the optical switch between the:
first state and the second state according to a schedule, wherein said scheduler is co-ordinated with a TDM timetable for communication between the OLT and each of the first ONU set and the second ONU set using TDM; and
primary state and the secondary state according to the schedule, wherein said scheduler is further co-ordinated with an additional TDM timetable for communication between the further OLT and each of the first ONU set and the second ONU set using TDM; and
the method comprising the steps of:
providing, when the optical switch is in the primary state, the optical switch in one of the first state and the second state, thereby facilitating communication between the OLT and the first ONU set or the second ONU set, respectively (410);
subsequently determining, using the scheduler:
an upcoming time to switch the optical switch from the first state or second state in which said switch is provided to the other one of the first state and second state, so as to cause routing between the OLT and the other of the first ONU set and the second ONU set in coordination with the TDM timetable (420); and
a further upcoming time to switch the optical switch from the primary state or secondary state in which said switch is provided to the other one of said states, so as to cause routing between the first ONU set or the second ONU and the other one of the OLT and further OLT in coordination with the TDM timetable and the additional TDM timetable; and
instructing, at the determined upcoming time and at the further determined time, and subsequently causing, the optical switch to switch to said other first state or second state and said other primary state or secondary state (440).

2. A method according to Claim 1, further comprising a step of providing the schedule to the optical switch (120), and wherein the determining and instructing steps are performed by the optical switch.

3. A method according to any preceding claim, wherein the determining and instructing steps are performed by the OLT (110).

4. A method according to any preceding claim, wherein the determining and instructing steps are performed by the first (130-1) and or second (130-2) ONU sets.

5. A method according to any preceding claim, wherein the determined time to switch includes a switching delay between instructing and completing switching of the optical switch (120).

6. A method according to any preceding claim, wherein the determined time to switch includes a transmission delay between transmission of an optical signal from the OLT (110) or from one of the ONUs (130) and receipt of said transmission at the optical switch (120).

7. A method according to any preceding claim, wherein the optical switch (120) comprises a:
first switching element configured to communicate only upstream communications, and to switch between the first and second states; and
second switching element configured to communicate only downstream communications, and to switch between the first and second states;
wherein, the method is performed in respect of each of the first and second switching elements so as to switch between the first and second states for upstream and downstream communication in coordination with the TDM timetable.

8. A method according to any preceding claim, wherein the first (140-2-1) and/or second (140-2-2) branch/es comprise/s an optical splitter.

9. A method according to Claim 8, wherein the first (130-1) and/or second (130-2) ONU set/s comprise/s a plurality of ONUs connected to the optical splitter/s.

10. A method according to any preceding claim, wherein the telecommunications network (100) further comprises a:
plurality of the optical switches; and
spine power splitter, wherein each of the plurality of optical switches is connected to the OLT (110) via the spine power splitter; and
wherein the method is performed for each of the plurality of the optical switches.

11. A method according to any preceding claim, wherein the telecommunications network (100) further comprises a:
further optical switch, connected to the optical switch, via the second branch, and arranged at a junction of a third branch and a fourth branch, each different to the first branch and the second branch, of the fibre optic telecommunications network, and configured to switch between, at least, a:
third state, in which the optical switch is connected, via the further optical switch, to the third branch instead of the fourth branch; and
fourth state, in which the optical switch is connected, via the further optical switch, to the fourth branch instead of the third branch;
third ONU set, comprising at least one ONU, connected to the further optical switch via the fourth branch;
wherein:
the second ONU set is connected to the further optical switch via the third branch;
the scheduler is further configured to schedule switching of the further optical switch between the third state and the fourth state, wherein said scheduler is further co-ordinated with an additional TDM timetable for communication between the OLT and the third ONU set using TDM; and
the method further comprises the steps of:
providing the further optical switch in one of the third state and the fourth state, thereby facilitating communication between the optical switch and the second ONU set or the third ONU set, respectively;
subsequently determining, using the scheduler, an additional upcoming time to switch the further optical switch from the state in which said switch is provided to the other one of the third state and fourth state, so as to cause routing between the OLT and the other of the second ONU set and the third ONU set in coordination with the additional TDM timetable; and
instructing, at the determined additional upcoming time, and subsequently causing, the further optical switch to switch to said other third state or fourth state.

12. A computer-readable carrier medium comprising a computer program, which, when the computer program is executed by a computer, causes the computer to carry out the steps of any one of the preceding claims.

13. A fibre optic telecommunications network comprising a/an:
Optical Line Terminal, OLT, configured for Time-Division Multiplexing, TDM, communication;
optical switch, connected to the OLT and arranged at a junction of a first branch and a second branch, different to the first branch, of the fibre optic telecommunications network, and configured to switch between, at least, a:
first state, in which the OLT is connected, via the optical switch, to the first branch instead of the second branch; and
second state, in which the OLT is connected, via the optical switch, to the second branch instead of the first branch, wherein the optical switch is provided in one of the first state and the second state;
further OLT, configured for TDM communication, and connected to the optical switch independently of the OLT, and wherein the optical switch is further configured to switch between a:
primary state, in which the optical switch is connected to the OLT;
secondary state, in which the optical switch is connected to the further OLT;
first ONU set, comprising at least one ONU, connected to the optical switch via the first branch;
second ONU set, comprising at least one ONU, connected to the optical switch via the second branch;
scheduler for scheduling switching of the optical switch between:
the first state and the second state according to a schedule, wherein said scheduler is co-ordinated with a TDM timetable for communication between the OLT and each of the first ONU set and the second ONU set using TDM; and
the primary state and the secondary state according to the schedule, wherein said scheduler is further co-ordinated with an additional TDM timetable for communication between the further OLT and each of the first ONU set and the second ONU set using TDM; and
processor configured to:
determine, using the scheduler:
an upcoming time to switch the optical switch from the first state or second state in which said switch is provided to the other one of the first state and second state, so as to cause routing between the OLT and the other of the first ONU set and the second ONU set in coordination with the TDM timetable; and
a further upcoming time to switch the optical switch from the primary or secondary state in which said switch is provided to the other one of said states, so as to cause routing between the first ONU set or the second ONU and the other one of the OLT and further OLT in coordination with the TDM timetable and the additional TDM timetable; and
instruct, at the determined upcoming time and at the further determined time, and subsequently cause, the optical switch to switch to said other first state or second state and said other primary state or secondary state (440).

14. A fibre optic telecommunications network according to Claim 13, wherein the processor forms a part of the OLT and/or the optical switch.
